# EUROPEAN PATENT SPECIFICATION

(11) **EP 3 026 669 B1**
(45) Date of publication and mention of the grant of the patent: **15.01.2020**
(21) Application number: 14194728.3
(22) Date of filing: 25.11.2014
(51) Int. Cl.: G11B 20/12, G06F 12/00

(54) **Methods for restoring data, method for storing data and tape storage system**
Verfahren zur Wiederherstellung von Daten, Verfahren zur Speicherung von Daten und Bandspeichersystem
Procédés de restauration de données, procédé de stockage de données et système de stockage de bande

(43) Date of publication of application: 01.06.2016
(73) Proprietor: Fujitsu Limited, Kawasaki-shi Kanagawa 211-8588 (JP)
(72) Inventor: Stefanowicz, Dominik, 93-129 Lódz (PL)
(74) Representative: Epping - Hermann - Fischer

(56) References cited:
- US-A1- 2012 151 136
- US-A1- 2014 006 357
- US-A1- 2014 214 769
- US-A1- 2014 304 470

## Description

The invention relates to methods for restoring data from at least two tapes of a tape storage system, a method for storing data on at least two tapes of a tape storage system for redundant data storage and a tape storage system comprising a data processor and at least two tape storage drives.

Tape storage systems can be used for a backup of data of a computer system. The backup data can be stored on two or more tapes to increase safeguard against failure by redundancy. In conventional tape storage systems, either a complete restore of all backup data or a partial restore may be requested by a user. The tape is positioned at the beginning of the relevant data and the data is restored. Both the positioning of the tape to an access position as well as the restoring of large volumes of data is time consuming. With increasing amounts of backup data, it is desirable to improve the restore time.

Document US 2014/0214769 A1 describes a backup storage system, a backup storage apparatus and a method for backing up data. A full backup image or an incremental backup image is created depending on the generation of the backup.

Document US 2012/0151136 A1 describes instant data restoration. An exposed Internet Small Computer System Interface (iSCSI) target of a backup repository is defined as a source of, and a storage volume to be recovered as a target of, a mirrored pair of storage resources. The iSCSI target represents a point-in-time backup snapshot. Data from the iSCSI target is synchronized to the storage volume. The mechanisms of the illustrated embodiments leverage iSCSI with Instant Restore to reduce a Recovery Time Objective (RTO) and provide a secure transport when recovering a volume over a WAN.

Document US 2014/0006357 A1 describes restoring an archived file in a distributed system, wherein two or more cloud controllers collectively manage distributed filesystem data that is stored in one or more cloud storage systems.

Document US 2014/0304470 A1 discloses a reverse mirroring RAID Level I system and method that decreases read access times. By recording mirrored data in a mirrored disk in a reverse order, spindle access time for data to be read from either the primary disk or the mirrored disk is reduced. As such, overall performance of the reverse mirroring technique is increased.

According to the invention, methods for restoring data from at least two tapes, a method for storing data on at least two tapes and a tape storage system are disclosed, which increase the speed of restore operations.

According to a first aspect of the invention, a method for restoring data from at least two tapes of a tape storage system is described. A first tape comprises two sets of data blocks in a first order and a second tape comprises the two sets of data blocks in a second order. The method comprises the step of:
- restoring the first set of data blocks from a first tape, and restoring the second set of data blocks simultaneously from the second tape.

Tape storage systems with more than one tape may be used for redundant data storage systems. In such systems the data is stored on at least two tapes so that the data is still available, if one tape is destroyed or contains incorrect data. The data on each tape can be split into data blocks, such as logical volumes or sectors. According to the invention, data blocks on a first tape are stored in a first order. This first order can be pre-calculated. The data can be read from the tapes only in one direction. To read different parts of the tapes simultaneously without repositioning the tapes the data blocks are stored on the second tape in a different order. If data blocks are stored on another tape in a second order, which is different to the first order, the physical distances for positioning the tapes in a way that a reading head can read one specific data block will be different. Therefore, positioning times will be different, too. By restoring a first part of data blocks from the first tape and restoring second part of data blocks simultaneously from the second tape an improvement in reading time can be obtained.

According to a second aspect of the invention a method for restoring at least one data block from a tape storage system is described. The tape storage system uses at least two tapes, a first tape comprising two sets of data blocks in a first order and a second tape comprising the two sets of data blocks in a second order. The method comprises the steps of:
- determining a position of the at least one data block to be restored for the two tapes;
- restoring the data from the tape requiring a minimal time for accessing the determined position.

If a user does not want to perform a complete restore of data, but a restore of specific data blocks, restore time can be decreased using this method. By determining a tape with the lowest positioning time for accessing the position of the stored data block, the restore time can be optimized. A time benefit is gained by choosing the tape with the lowest positioning time.

According to a third aspect of the invention, a method for storing data on at least two tapes of a tape storage system for redundant data storage is described. The data is split up into data blocks. The method comprises the steps of:
- writing a first set of the data blocks and a second set of the data blocks on a first tape, based on a first order;
- writing the first set of the data blocks and the second set of the data blocks on a second tape, based on a second order, the second order being different from the first order.

By writing the data blocks on the tapes in a different order, the data blocks are stored in a way such that two identical copies of a specific data block are stored at different positions of the tapes. That means that a distance from a beginning of a tape to the place on which a specific data block is stored, is different for each tape. If the reading of the tapes starts at a similar position on both tapes, for example a very beginning of both tapes, the time for reaching the position of the specific data block will be different. This difference can be used in a restore operation to decrease the restore time. In particular, by storing the data blocks on the tapes in different orders, the methods according to the first and the second aspect may be performed.

For writing data on a tape of a tape drive, a data is split into data blocks, such as logical volumes or sectors. For writing the data blocks on the tape, the data blocks can be indexed or enumerated. For example the first data block that is written on a first tape has the index number 1. The second data block that is written on the first tape has the index number 2. The last data block that is written on the first tape has the index number n. In this way every data block is written to the first tape. For writing the data on a second tape of the tape drive, the split data blocks are written on the second tape in a second order.

A set of data blocks can be understood as a group of two data blocks or more. For example, a first set of data blocks may comprise one half of all data blocks that are written on a tape and a second set of data blocks may comprise the other half of all data blocks that are written on a tape. In another example, the first set of data blocks may comprise only a small number of data blocks and the second set of data blocks comprises other data blocks, but also a small number of data blocks. There may be data blocks that are written on the tapes and that are not part of the sets of data blocks.

The index numbers mentioned in this application are a simple example to improve an understanding of the methods. Of course other addressing systems and/or indexing methods may be used by tape storage systems. These can comprise position codes that are not written on the tapes but stored in a table to associate data with data block positions on tapes.

Advantageously, the second order is based on the first order in reverse.

For example, the first order, which is used to write the data blocks on the first tape may be increasing, starting with index number 1 to index number n. Therefore, the second order, which is based on the first order in reverse, starts with the last data block corresponding to the index number n. From thereon, each data block with decreasing index numbers is written on the tape. A second data block on the second tape would therefore be the data block with the index number n-1. The last data block which is written on the second tape in this case, would then be the data block with the index number 1.

A benefit of the method is that the positioning of the tape to access every logical volume is reduced significantly, by choosing the tape with the lower positioning time. Moreover, a restore time for a complete restore takes only (about) half of the time of performing a restore of only one tape, because two different halves of the data blocks may be restored simultaneously from both tapes.

Advantageously, the first set and the second set each comprise more than one data block and an order of the data blocks of the second part is reversed with respect to the order of the data blocks of the first part.

By reversing the order of the sets of the data blocks, it is possible to arrange some data blocks at specific tape positions, still using the benefit of a fast restore. For example, a data block that is known to be used very frequently is stored at a very beginning of one tape and at a rear end of the other tape.

A fourth aspect of the invention relates to a tape storage system. The storage system comprises a data processor and at least two tape storage drives for storing data in data blocks using a method according to the third aspect for storing data on tapes and/or using a method according to the first or second aspect for restoring data.

The invention will be explained in greater detail below with reference to several drawings. The same reference signs will be used for like components of different embodiments.
- Figure 1: shows a tape storage system;
- Figure 2: shows a flow diagram of a method for storing data on at least two tapes of a tape storage system;
- Figure 3: shows a flow diagram of a method for restoring data from at least two tapes of a tape storage system; and
- Figure 4: shows another tape storage system.

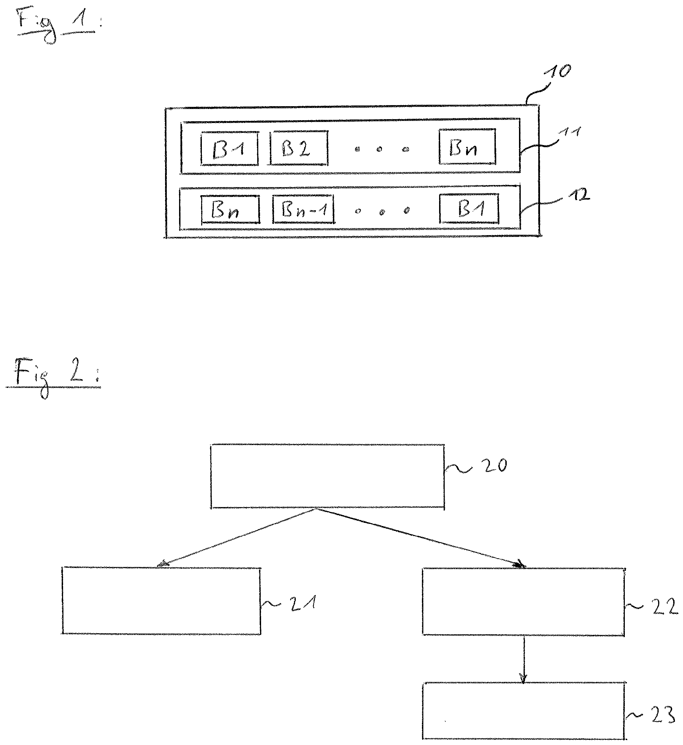

Figure 1 shows a tape storage system 10. The tape storage system 10 is adapted for redundant data storage. The tape storage system 10 comprises two tape drives. Each tape drive accommodates one tape. By storing data redundant on more than one tape, the data is still available, if one tape is destroyed or contains incorrect data. The tape storage system 10 in this example comprises two tape drives. A first tape 11 is arranged in a first tape drive, and a second tape 12 in a second tape drive. Of course, the number of tape drives and tapes can vary in other examples so that the tape storage system 10 comprises for example three or more tape drives. For storing the data on the first tape 11 and the second tape 12, the data is split up into data blocks B1, ..., Bn. These data blocks B1, ..., Bn are written on the first tape 11 and the second tape 12 as logical volumes.

The data blocks B1, ..., Bn are written on the tapes to specific positions. On the first tape 11, the data blocks B1, ..., Bn are written in a first order with increasing index numbers. This results in an increasing order of data blocks B1, ..., Bn on the first tape 11. The data block B1 with the lowest index number is written at a first position. At a second position, the data block B2 with the next index number is written. On the second tape 12, the data blocks B1, ..., Bn are written in a reversed order. At a first position on the second tape 12, data block Bn is written. On a second position, the data block Bn-1 is written. While the last data block of the first tape 11 is the data block Bn, on the second tape 12, the last data block is the data block B1.

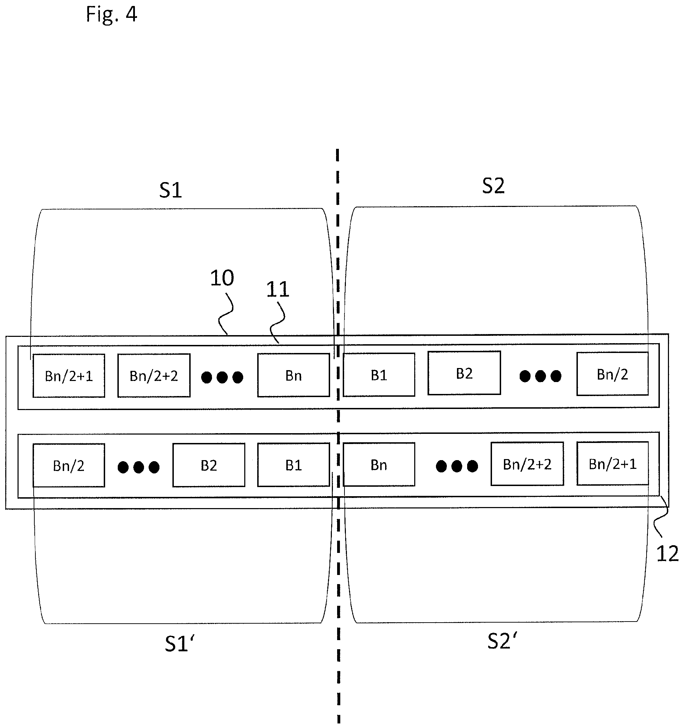

Figure 4 shows an example of a tape storage system 10 according to the invention. A set of data blocks B1, ..., Bn is split up into a first set S1 of data blocks B1, B2, ..., Bn/2 comprising the data blocks B1, B2, ..., Bn/2 with index numbers 1 to n/2 and a second set S2 of data blocks Bn/2+1, ..., Bn with the index numbers n/2+1 to n. These sets can be seen as subsets of the set of data blocks B1, ..., Bn. The first set S1 of data blocks B1, B2, ..., Bn/2 and the second set S2 of data blocks Bn/2+1, Bn/2+2, ..., Bn are written on the first tape 11 in a reversed order. That is, the second set S2 of data blocks Bn/2+1, ..., Bn is written on the first tape 11 before the first set S1 of data blocks B1, B2, ..., Bn/2 is written on the first tape 11. On the second tape 12, both, the order of the data blocks B1, ..., Bn of each set of data blocks B1, ..., Bn and the order of the sets of data blocks B1, ..., Bn are reversed. In this way, inversed subsets S1' and S2', comprising data blocks Bn/2, ..., B2, B1 and Bn, ..., Bn/2+2, Bn/2+1 are created and written to the second tape 12.

In another example that is not depicted, four tapes are used to store the data blocks B1, ..., Bn. The first two tapes comprise the data blocks B1, ..., Bn in orders as described with respect to the example of figure 1. The third and fourth tape comprise the data blocks B1, ..., Bn in orders as described with respect to the example of figure 4. Therefore the data blocks B1, ..., Bn are stored on four different tapes in four different orders. In this example access time to stored data blocks B1, ..., Bn is further decreased. In general, the number of subsets and tapes is not limited.

In yet another example that is not depicted, only a few data blocks B1, ..., Bm are combined to form a first set of data blocks B1, ..., Bm and a few other data blocks Bo, ..., Bp, which are not included in the first set of data blocks B1, ..., Bm, are combined to form a second set of data blocks Bo, ..., Bp. During writing the first set of data blocks B1, ..., Bm and the second set of data blocks Bo, ..., Bp on the first tape, a first order is used. During writing the first set of data blocks B1, ..., Bm and the second set of data blocks Bo, ..., Bp on the second tape, a second order is used. Other data blocks Bq, ..., Bn may be written in any order on both tapes.

If the data blocks B1, ..., Bn are written on the first tape 11 and the second tape 12 in a way as described above, a fast restore of the data can be performed using one of the method described below.

For performing a complete restore of the stored data, for example as a disaster recovery, the first tape 11 and the second tape 12 are used for the restore operation simultaneously, both starting at a first positon. With this technique, the restore can be performed twice as fast as a restore from only one tape. While the data block B1 is restored from the first tape 11, the data block Bn is restored from the second tape 12. While the data block B2 is restored from the first tape 11, the data block Bn-1 is restored from the second tape 12. So, when half of the data blocks B1, ..., Bn are restored from the first tape 11, the other half of the data blocks B1, ..., Bn has already been restored from the second tape 12.

In another embodiment, if only one data block B1, ..., Bn or a part of the data blocks B1, ..., Bn has to be restored, the tape with the lower access time is used. To determine which tape has the lower access time, access times for both tapes, the first tape 11 and the second tape 12 are determined. For example, if the data block B2 is to be restored, the time for positioning the first tape 11 to the position of data block B2 is determined and the time for positioning the second tape 12 to the position of data block B2 is determined. A first reading head of the first tape drive is configured to read the data of the first tape 11. A second reading head of the second tape drive is configured to read the data of the second tape 12. Assuming that the first reading head and the second reading head are positioned at the very beginning of each tape, the position of the data block B2 on the first tape 11 is closer to the first reading head than the position of the data block B2 on the second tape 12 to the second reading head. Therefore, the first tape 11 is chosen for the restore operation.

Figure 2 shows a flow diagram for storing data on a tape storage system 10. In step 20, the tape storage system 10 receives data split up into different data blocks B1, ..., Bn. For this method, it is not essential where the splitting up of the data is performed. It can be performed in the tape storage system 10. It can also be performed in an external computer system or another device.

In step 21, the received data blocks B1, ..., Bn are written to the first tape 11 in the order, in which the tape storage system 10 received the data. In parallel to step 21, in step 22, an alternative order for writing the data blocks B1, ..., Bn on the second tape 12 is determined. In step 23, the data blocks B1, ..., Bn are written to the second tape 12 in the calculated order, determined in step 22.

In an alternative embodiment, step 21 includes generating an order for writing the data blocks B1, ..., Bn on the first tape 11.

In another alternative embodiment, a pre-given order for writing data blocks B1, ..., Bn on the first tape 11 and the second tape 12 is provided in step 20. In this embodiment, step 22 is not necessary and step 21 and step 23 are performed in parallel after step 20.

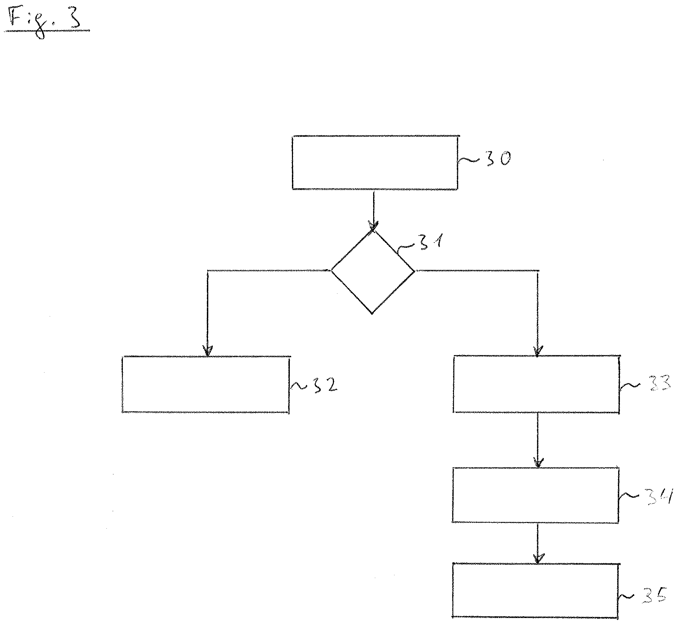

Figure 3 shows a flow diagram for restoring data from at least two tapes of a tape storage system 10. In step 30, a restore command is received.

In step 31 the nature of the restore command is determined. Two different restore commands are considered. In a first case, a complete restore is requested. In a second case, only a partial restore is requested. If the restore command requires a complete restore, the restore is initialized in step 32.

Step 32 includes starting and performing the restore from the first tape 11 and from the second tape 12. The restore from the first tape 11 and from the second tape 12 is performed simultaneously.

If only a part of the data has to be restored, the method proceeds to step 33 instead. The data blocks B1, ..., Bn that are relevant for this partial restore may be stored at different positions on both tapes 11, 12. Therefore the reading heads of both tape drives need different times to be positioned at the data blocks B1, ..., Bn. These positioning times for the first tape 11 and for the second tape 12 are determined in step 33. The positioning data that is needed to determine the positioning times may be part of the restore command. In another example, the positioning data is stored in a lookup table or a register file of the tapes or the tape drive system.

In step 34 the determined positioning times are evaluated. The tape with the lower positioning time is chosen for the restore operation.

In step 35 the restore operation is performed from the tape with the lowest positioning time.

### List of reference symbols

- 10: tape storage system
- 11: first tape
- 12: second tape
- B1, B2, Bn/2, Bn/2+1, Bn-1, Bn: data block
- S1: first set
- S2: second set
- S1', S2': inverse subset
- 20 to 23, 30 to 35: method steps

## Claims

1. Method for restoring data from at least two tapes (11, 12) of a tape storage system (10), a first tape (11) comprising two sets of data blocks (B1, ..., Bn) in a first order of the sets and a second tape (12) comprising the two sets of data blocks (B1, ..., Bn) in a second order of the sets, the second order being different from the first order, the
method comprising the step of:
- restoring the first set of data blocks (B1, ..., Bn) from the first tape (11), and restoring the second set of data blocks (B1, ..., Bn) simultaneously from the second tape (12).

2. Method for restoring at least one data block (B1, ..., Bn) from a tape storage system (10) using at least two tapes (11, 12), a first tape (11) comprising two sets of data blocks (B1, ..., Bn) in a first order of the sets and a second tape (12) comprising the two sets of data blocks (B1, ..., Bn) in a second order of the sets, the method comprising the steps of:
- determining a position of the at least one data block (B1, ..., Bn) to be restored for the two tapes (11, 12);
- restoring the at least one data block from the tape requiring a minimal time for accessing the determined position.

3. Method for storing data on at least two tapes (11, 12) of a tape storage system (10) for redundant data storage, the data being split up into data blocks (B1, ..., Bn), the method comprising the steps of:
- writing a first set of the data blocks (B1, ..., Bn) and a second set of the data blocks (B1, ..., Bn) on a first tape (11), based on a first order of the sets;
- writing the first set of the data blocks (B1, ..., Bn) and the second set of the data blocks (B1, ..., Bn) on a second tape (12), based on a second order of the sets, the second order being different from the first order.

4. Method of claim 1 to 3, wherein the second order is based on the first order in reverse.

5. Method of one of claims 1 to 4, wherein the first set of the data blocks (B1, ..., Bn) and the second set of the data blocks (B1, ..., Bn) each comprise more than one data block (B1, ..., Bn) and an order of the data blocks (B1, ..., Bn) of the second set of the data blocks (B1, ..., Bn) is reversed with respect to the order of the data blocks (B1, ..., Bn) in the first set of the data blocks (B1, ..., Bn) .

6. Tape storage system (10) comprising a data processor and at least two tape storage drives for storing data in data blocks (B1, ..., Bn) using a method of one of claims 3 to 5 for storing data on tapes (11, 12) and/or using a method of one of claims 1 or 2 for restoring data.

## Patentansprüche

1. Verfahren zum Wiederherstellen von Daten von zumindest zwei Bändern (11, 12) eines Bandspeichersystems (10), wobei ein erstes Band (11) zwei Sätze von Datenblöcken (B1, ..., Bn) in einer ersten Reihenfolge der Sätze aufweist und ein zweites Band (12) die zwei Sätze von Datenblöcken (B1, ..., Bn) in einer zweiten Reihenfolge der Sätze aufweist, wobei sich die erste Reihenfolge von der zweiten Reihenfolge unterscheidet, wobei das Verfahren den Schritt umfasst:
- Wiederherstellen des ersten Satzes von Datenblöcken (B1, ..., Bn) von dem ersten Band (11), und gleichzeitiges Wiederherstellen des zweiten Satzes von Datenblöcken (B1, ..., Bn) von dem zweiten Band (12) .

2. Verfahren zum Wiederherstellen von zumindest einem Datenblock (B1, ..., Bn) von einem Bandspeichersystem (10) mithilfe von zumindest zwei Bändern (11, 12), wobei ein erstes Band (11) zwei Sätze von Datenblöcken (B1, ..., Bn) in einer ersten Reihenfolge der Sätze aufweist und ein zweites Band (12) die zwei Sätze von Datenblöcken (B1, ..., Bn) in einer zweiten Reihenfolge der Sätze aufweist, wobei das Verfahren folgende Schritte umfasst:
- Bestimmen einer Position des zumindest einen wiederherzustellenden Datenblocks (B1, ..., Bn) für die beiden Bänder (11, 12);
- Wiederherstellen des zumindest einen Datenblocks von dem Band, wofür eine minimale Zeit für den Zugriff auf die bestimmte Position benötigt wird.

3. Verfahren zum Speichern von Daten auf zumindest zwei Bändern (11, 12) eines Bandspeichersystems (10) zur redundanten Datenspeicherung, wobei die Daten in Datenblöcke (B1, ..., Bn) unterteilt sind, wobei das Verfahren die folgenden Schritte umfasst:
- Schreiben eines ersten Satzes der Datenblöcke (B1, ..., Bn) und eines zweiten Satzes der Datenblöcke (B1, ..., Bn) auf ein erstes Band (11) basierend auf einer ersten Reihenfolge der Sätze;
- Schreiben des ersten Satzes der Datenblöcke (B1, ..., Bn) und des zweiten Satzes der Datenblöcke (B1, ..., Bn) auf ein zweites Band (12) basierend auf einer zweiten Reihenfolge der Sätze, wobei sich die zweite Reihenfolge von der ersten Reihenfolge unterscheidet.

4. Verfahren nach Anspruch 1 bis 3, wobei die zweite Reihenfolge umgekehrt auf der ersten Reihenfolge basiert.

5. Verfahren nach einem der Ansprüche 1 bis 4, wobei der erste Satz der Datenblöcke (B1, ..., Bn) und der zweite Satz der Datenblöcke (B1, ..., Bn) jeweils mehr als einen Datenblock (B1, ..., Bn) aufweisen und eine Reihenfolge der Datenblöcke (B1, ..., Bn) des zweiten Satzes der Datenblöcke (B1, ..., Bn) bezüglich der Reihenfolge der Datenblöcke (B1, ..., Bn) in des ersten Satzes der Datenblöcke (B1, ..., Bn) umgekehrt ist.

6. Bandspeichersystem (10), aufweisend einen Datenprozessor und zumindest zwei Bandspeicherlaufwerke zum Speichern von Daten in Datenblöcken (B1, ..., Bn) mithilfe eines Verfahrens nach einem der Ansprüche 3 bis 5 zum Speichern von Daten auf Bändern (11, 12) und/oder mithilfe eines Verfahrens nach einem der Ansprüche 1 oder 2 zum Wiederherstellen von Daten.

## Revendications

1. Procédé de restauration de données à partir d'au moins deux bandes (11, 12) d'un système de stockage sur bandes (10), une première bande (11) comprenant deux ensembles de blocs de données (B1, ..., Bn) dans un premier ordre des ensembles et une deuxième bande (12) comprenant les deux ensembles de blocs de données (B1, ..., Bn) dans un deuxième ordre des ensembles, le deuxième ordre étant différent du premier ordre, le procédé comprenant l'étape de :
- restauration du premier ensemble de blocs de données (B1, ..., Bn) à partir de la première bande (11) et restauration du deuxième ensemble de blocs de données (B1, ..., Bn) simultanément à partir de la deuxième bande (12).

2. Procédé de restauration d'au moins un bloc de données (B1, ..., Bn) à partir d'un système de stockage sur bandes (10) à l'aide d'au moins deux bandes (11, 12), une première bande (11) comprenant deux ensembles de blocs de données (B1, ..., Bn) dans un premier ordre des ensembles et une deuxième bande (12) comprenant les deux ensembles de blocs de données (B1, ..., Bn) dans un deuxième ordre des ensembles, le procédé comprenant les étapes de :
- détermination d'une position de l'au moins un bloc de données (B1, ..., Bn) à restaurer pour les deux bandes (11, 12) ;
- restauration de l'au moins un bloc de données à partir de la bande nécessitant une durée minimale pour accéder la position déterminée.

3. Procédé de stockage de données sur au moins deux bandes (11, 12) d'un système de stockage sur bandes (10) pour le stockage redondant de données, les données étant divisées en blocs de données (B1, ..., Bn), le procédé comprenant les étapes de :
- écriture d'un premier ensemble de blocs de données (B1, ..., Bn) et d'un deuxième ensemble de blocs de données (B1, ..., Bn) sur une première bande (11), d'après un premier ordre des ensembles ;
- écriture du premier ensemble de blocs de données (B1, ..., Bn) et du deuxième ensemble de blocs de données (B1, ..., Bn) sur une deuxième bande (12), d'après un deuxième ordre des ensembles, le deuxième ordre étant différent du premier ordre.

4. Procédé selon les revendications 1 à 3, le deuxième ordre étant basé sur le premier ordre inversé.

5. Procédé selon l'une des revendications 1 à 4, le premier ensemble de blocs de données (B1, ..., Bn) et le deuxième ensemble de blocs de données (B1, ..., Bn) comprenant chacun plus d'un bloc de données (B1, ..., Bn) et un ordre des blocs de données (B1, ..., Bn) du deuxième ensemble de blocs de données (B1, ..., Bn) étant inversé par rapport à l'ordre des blocs de données (B1, ..., Bn) dans le premier ensemble de blocs de données (B1, ..., Bn).

6. Système de stockage sur bandes (10) comprenant un processeur de données et au moins deux disques de stockage sur bandes pour stocker les données dans des blocs de données (B1, ..., Bn) à l'aide d'un procédé selon l'une des revendications 3 à 5 pour stocker les données sur des bandes (11, 12) et/ou à l'aide d'un procédé selon l'une des revendications 1 à 2 pour restaurer les données.
